# EUROPÄISCHE PATENTSCHRIFT

(11) **EP 0 407 629 B1**
(45) Veröffentlichungstag und Bekanntmachung des Hinweises auf die Patenterteilung: **26.01.1994**
(21) Anmeldenummer: 89112605.4
(22) Anmeldetag: 10.07.1989
(51) Int. Cl.: H04J 3/16, H04J 14/08, H04B 10/12

(54) **Verbindungseinrichtung zur Datenübertragung über Lichtwellenleiter**
Communication device for data transmission over optical fibres
Dispositif de communication pour la transmission de données par fibres optiques

(43) Veröffentlichungstag der Anmeldung: 16.01.1991
(73) Patentinhaber: SIEMENS AKTIENGESELLSCHAFT, 80333 München (DE)
(72) Erfinder: Burghardt, Hartmut, Dr.-Ing., D-8051 Holzkirchen (DE); Meyer, Ralph, Dipl.-Ing., D-8038 Gröbenzell (DE)

(56) Entgegenhaltungen:
- EP-A- 0 198 425
- DE-A- 3 146 468
- DE-A- 3 501 674
- FR-A- 2 522 908
- US-A- 3 665 405

## Beschreibung

Die Erfindung betrifft eine Verbindungseinrichtung zur Datenübertragung nach dem Oberbegriff des Patentanspruchs 1.

Für die Datenübertragung wurden bisher weitgehend Kupferkabel eingesetzt. Ein besonderes Problem ist hierbei die Einhaltung der Störstrahlungsbestimmungen. Der Aufwand für die Abschirmung wächst mit der Übertragungsdatenrate, so daß auch die Zusammenfassung von mehreren Datenkanälen durch Multiplexen häufig nicht preisgünstiger wird. Besonders problematisch werden die Datenverbindungen, wenn nur eine einseitige Erdung (Sternerdung) zulässig ist. Daher wurden Verbindungseinrichtungen mit Lichtwellenleitern entwickelt, die jedoch nur für eine feste Datenrate und eine feste Kanalzahl einsetzbar sind.

In der deutschen Offenlegungschrift DE-A-35 01 674 ist ein Multiplexer/Demultiplexer mit flexibler Signalverarbeitungsfunktion für digitale Zeitmultiplex-Nachrichtenübertragungssysteme beschrieben.

Bei einem Multiplexer, dem ein Codewandler zur Erzeugung eines Leistungscodes mit parallen Eingängen für mehrere zu übertragende Digitalsignale vorgeschaltet ist, sind an den Codewandler-Eingängen mehrere Zwischenspeicher vorgesehen, die jeweils so steuerbar sind, daß sie in einer ersten Betriebsart ein einziges Eingangssignal, das an einen Serien-Eingang angelegt ist, in mehrere parallele Ausgangssignale umsetzen und diese in den Codewandlereingängen zuführen, und in einer zweiten Betriebsart mehrere Digitalsignale, die parallel an Paralleleingängen eines Zwischenspeichers anliegen, in paralleler Form auf die Codewandler-Eingänge weitergeben. Somit kann diese Einrichtung beispielsweise vier 560 Mbit/s-Eingangssignale oder 16 140 Mbit/s-Eingangssignale jeweils zu einem 2,6 Gbit/s-Ausgangssignale bündeln. Ein Demultiplexer mit Codewandler und entsprechenden ausgangsseitigen Zwischenspeicher zur variablen Bündelauflösung ist ebenfalls angegeben. Solche Multiplexer/Demultiplexer sind vielseitig in verschiedenen Hierarchie-Stufen nach Breitband-Multiplexhierarchie einsetzbar, beispielsweise als Eingangsschaltungen zur variablen Bündelauflösung von an einer Vermittlung ankommenden Zeitmultiplex-Signalen bzw. als Ausgangsschaltung zur variablen Bündelung von der Vermittlungsstelle abgehenden Digitalsignalen.

Bei diesem System ist die Übertragung auf 4 bzw. 16 Signale beschränkt. Das Problem der Störsignale wird nicht angesprochen.

Aus der europäischen Patentanmeldung EP-A-0 198 425 ist ein breitbandiges dienstintegrierendes Nachrichtenübertragungssystem bekannt, bei dem Daten unterschiedlicher Geschwindigkeiten zu einem Multiplexsignal zusammengefaßt über optische Übertragungsstrecken übertragen werden. Ein Breitbandsignal wird hier ebenfalls durch Seriell-Parallel-Umsetzung in parallele Datensignale aufgeteilt.

Aufgabe der Erfindung ist es, eine universell einsetzbare Verbindungseinrichtung zur Datenübertragung über Lichtwellenleiter anzugeben.

Diese Aufgabe wird durch die im Patentanspruch 1 angegebenen Merkmale gelöst.

Weitere vorteilhafte Ausbildungen der Erfindung sind in den Unteransprüchen angegeben.

Vorteilhaft ist die universelle Einsetzbarkeit der Verbindungseinrichtung (Datenübertragungs-Link) für Datenkanäle mit unterschiedlichen Datenraten, die jedoch für eine vorgegebene Übertragungsdatenrate in einem ganzzahligen Verhältnis zueinander stehen müssen. Hierzu wird ein Datenkanal mit hoher Übertragungskapazität in mehrere Datenkanäle geringerer Übertragungskapazität aufgeteilt und über parallele Datenwege einem Coder zugeführt. Auch Datensignale mit einer geringeren Datenrate als der Datenrate auf einem Übertragungsweg können durch eine Mehrfachübertragung der einzelnen Bits übertragen werden. Da bei einer Verwendung von Lichtwellenleitern eine Vergrößerung der Datenrate unproblematisch ist, wird vorteilhafterweise ein Zusatzdatenkanal zur Verfügung gestellt, über den Sonderinformation übertragen wird, beispielsweise zur Synchronisation oder zur Fehlerüberwachung. Als besonders günstig erweist sich die Verbindungseinrichtung mit vier Datenkanälen und einem Zusatzkanal. Hiermit können Datensignale mit dem zur Zeit am häufigsten verwendeten Datenraten von 2, 4 und 8 Mbit/s realisiert werden.

Vorteilhaft ist auch, daß durch Verwendung einer anderen Oszillatorfrequenz und/oder eines anderen Phasenregelkreises andere Übertragungsdatenraten realisiert werden können.

Durch Einbau der Verbindungseinrichtung in Steckeinrichtungen des Glasfaser-Verbindungskabels kann diese problemlos zum Ersatz eines üblichen Kabels verwendet werden. Natürlich sind Anschlüsse für die Stromversorgung usw. bereits bei der Konstruktion der Geräte vorzusehen.

Ein Ausführungsbeispiel der Erfindung wird anhand von Prinzipschaltbildern näher erläutert.

Es zeigen
- Fig. 1: eine Verbindungseinrichtung mit einem Sende- und einem Empfangsteil,
- Fig. 2: ein Prinzipschaltbild des Durchschaltewegs für eine einkanalige Verbindung,
- Fig. 3: ein Prinzipschaltbild der Durchaltewege für eine zweikanalige Verbindung,
- Fig. 4: ein Prinzipschaltbild der Durchschaltewege für eine vierkanalige Verbindung und
- Fig. 5: ein Prinzipschaltbild mit zugehörigem Zeitdiagramm für eine Laufzeitausgleichsschaltung.

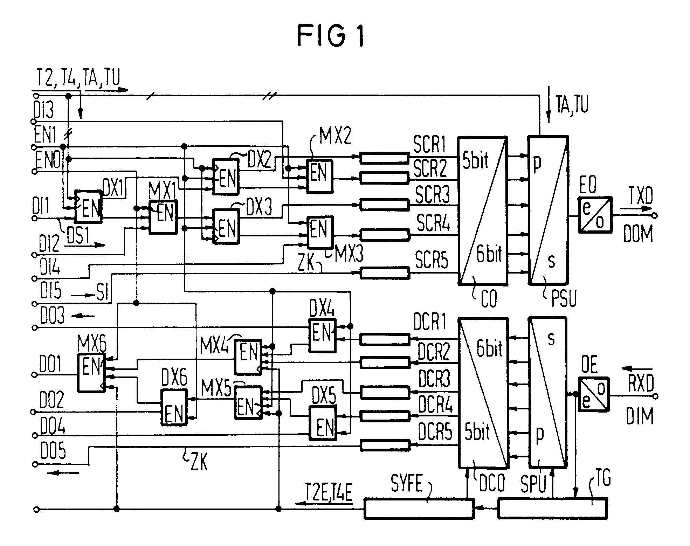

Der Sendeteil der in Fig. 1 dargestellten Verbindungseinrichtung enthält eine Verteileinrichtung mit drei Demultiplexer DX1 bis DX3 zum Parallelisieren und Verteilen eines Datensignals auf vier Datenwege und drei Multiplexer MX1 bis MX3 zum Anschalten von bis zu vier verschiedenen Datensignalen. In jeden der vier parallelen Datenwege ist ein Scrambler SCR1 bis SCR4 eingeschaltet.

Der erste Dateneingang DI1 ist auf dem Eingang des ersten Demultiplexers DX1 geführt, dessen erster Ausgang auf den Eingang des zweiten Demultiplexer DX2 geführt ist, dessen erster Ausgang wiederum auf den Eingang des ersten Scramblers SCR1 geführt ist während dessen zweiter Ausgang über den zweiten Multiplexer MX2 auf den Eingang des zweiten Scramblers SCR2 geführt ist. Der zweite Ausgang des ersten Demultiplexer DX1 ist über den ersten Multiplexer MX2, dessen zweiter Eingang den zweiten Dateneingang DI2 bildet, auf den Eingang des dritten Demultiplexers DX3 geführt, dessen erster Ausgang mit dem dritten Scrambler SCR3 verbunden ist, während dessen zweiter Ausgang über den dritten Multiplexer MX3, dessen zweiter Eingang den vierten Dateneingang DI4 bildet, auf den vierten Scrambler SCR4 geführt ist, dessen zweiter Eingang den dritten Dateneingang DI3 bildet.

Außerdem ist ein fünfter Dateneingang DI5 zur Übertragung von Sonderinformationen vorgesehen, der auf einem fünften Scrambler SCR5 geführt ist. Die Scramblerausgänge sind mit Paralleleingängen eines 5bit/6bit-Coders verbunden, dessen Ausgänge mit den Eingängen eines Parallel-Seriell-Umsetzers PSU verbunden sind, der über einen elektrooptischen Wandler EO ein Multiplexsignal TXD abgibt.

Dem Demultiplexer DX1 wird ein Taktsignal T2 mit der halben maximalen Taktfrequenz (4 MHz) eines Datensignals mit der maximalen Datenrate (8Mbit/s) zugeführt. Der erste Demultiplexer DX1 und der erste Multiplexer MX1 werden über einen Steuer-Eingang-Enable EN0 gesteuert, während die weiteren Demultiplexer DX2, DX3 und die weiteren Multiplexer MX2 und MX3 über einen zweiten Steuer-Eingang EN1 gesteuert werden. Eine logische "1" bedeutet für den Demultiplexer DX1, daß das Eingangssignal mit dem Takt T2 abwechselnd auf die Ausgänge durchgeschaltet wird. Den Demultiplexern DX2 und DX3 wird ein Takt T4 mit der halben Taktrate von T2 zugeführt. Die Multiplexer entsprechen hier ungetakteten Umschaltern, von denen wahlweise ein Eingangssignal ständig an den Ausgang durchgeschaltet wird.

Natürlich können die Demultiplexer auch anders ausgebildet werden und eine Parallelisierung kann mit unterschiedlichem Takten erfolgen. An dem Ausgang des Parallel-Seriell-Umsetzers PSU ist ein elektrooptischer-Wandler EO eingeschaltet, über dessen Datenausgang das Multiplexsignal TXD über einen Lichtwellenleiter ausgesendet wird.

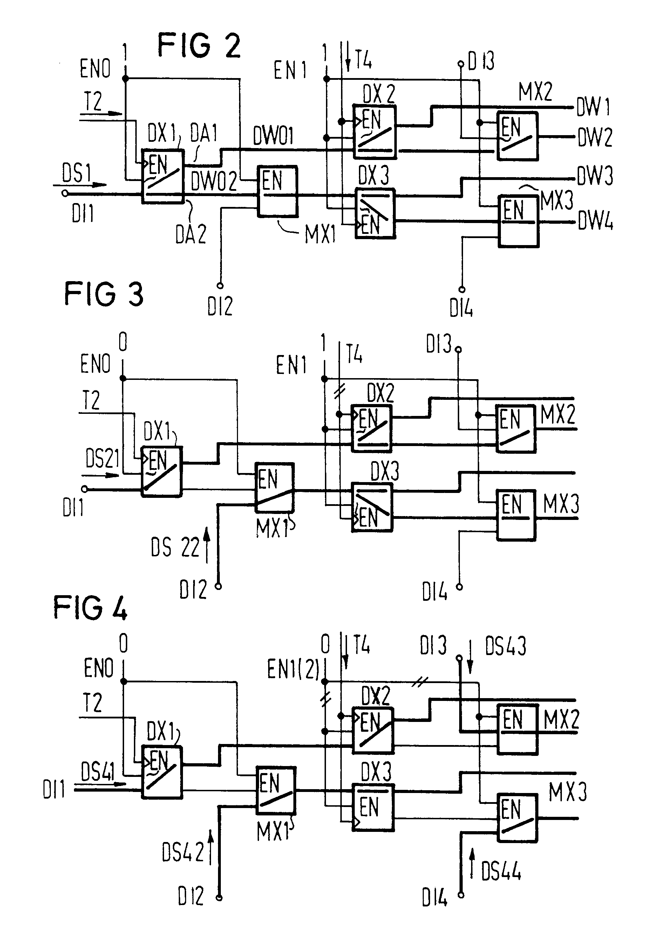

Die Funktion des Sendeteils wird zunächst anhand der Figuren 2 bis 4 näher erläutert. Um ein Datensignal DS1 maximaler Datenrate, hier 8Mbit/s zu übertragen, ist es notwendig, jeweils vier aufeinanderfolgende Bits zu parallelisieren. Hierzu wird an die beiden Steuer-Eingänge EN0 und EN1 die logische "1" angelegt. Am ersten Dateneingang DI1 liegt das Datensignal DS1 an. Dies wird zunächst mit dem Takt T2 in einen oberen und einen unteren Datenstrom zerlegt. Im zweiten Demultiplexer DX2 erfolgt eine weitere Aufteilung des oberen Datenstroms auf zwei Datenwege; ebenso wird der untere Datenstrom im dritten Demultiplexer DX3 auf zwei Datenwege aufgeteilt. Die Multiplexer MX1 bis MX3 trennen hierbei die übrigen Dateneingänge DI2 bis DI4 ab und schalten das parallelisierte Datensignal DS1 durch. Am Eingang des Codeumsetzers CO müssen die Bits der vier Datenwege gleichzeitig anliegen. Dies wird durch Laufzeitglieder erreicht, die in den unterschiedlichen Datenwegen eingeschaltet werden. Hierauf wird später noch ausführlicher eingegangen. In dieser Ausführungsform werden die Daten in den einzelnen Datenwegen separat verscrambelt. Die Scrambler können natürlich auch miteinander verbunden sein. Ebenso kann das vom Parallel-Seriell-Umsetzer abgegebene Multiplexsignal verscrambelt werden.

In Fig. 3 ist die Übertragung von zwei Datensignalen DS21 und DS22 dargestellt, die an Dateneingängen DI1 und DI2 anliegen. Hierzu muß lediglich an den ersten Steuer-Eingang EN0 die logische "0" angelegt werden. Die Aufteilung des Datensignals DS21 auf zwei parallele Datenwege erfolgt im zweiten Demultiplexer DX2, die des Datensignals DS22 im dritten Demultiplexer DX3. Die Multiplexer MX1 bis MX3 sind wieder so geschaltet, daß nur die Datensignale DS21 und DS22 durchgeschaltet werden und die Dateneingänge DI3 und DI4 abgetrennt sind.

In Fig. 4 liegt an den Steuer-Eingängen EN0 und EN1 die logische "0" an. Hierdurch werden vier Datensignale DS41 bis DS44, die an den Dateneingängen DI1 bis DI4 anliegen, durchgeschaltet. Alle Demultiplexer sind blockiert, d. h. die Eingänge werden jeweils auf einen bestimmten Ausgang durchgeschaltet. Es ist natürlich auch möglich, Datensignale unterschiedlicher Geschwindigkeit zu kombinieren. Die Steuer-Eingänge der Multiplexer und Demultiplexer, beispielsweise DX2, DX3 und MX2, MX3, müssen dann separat angesteuert werden, hier angedeutet durch den Steuer-Eingang EN1(2). Bei einer Kombination der Fig. 3 und der Fig. 4 kann somit ein Datensignal DS21 mit der halben maximalen Datenrate und zwei weitere Datensignale DS42 und DS44 mit jeweils einem Viertel der maximalen Datenrate gleichzeitig übertragen werden. Sollen Datensignale mit noch geringerer Datenrate übertragen werden, so werden deren Bits mehrfach übertragen.

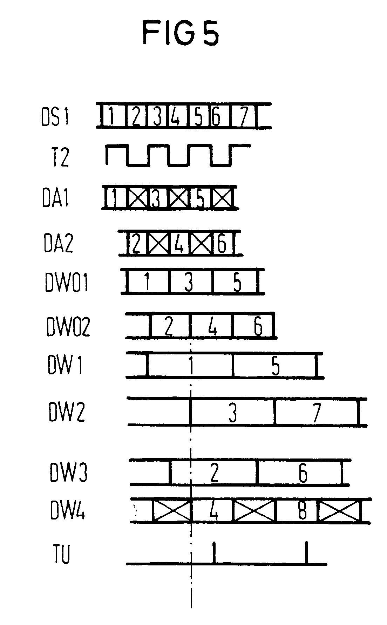

Am Eingang des Coders CO (Fig. 1) müssen jeweils vier aufeinanderfolgende Bits gleichzeitig anliegen. Dies kann durch Einschalten von Laufzeitgliedern in den einzelnen Signalwegen erreicht werden. Als Laufzeitglieder werden zweckmäßigerweise binäre Speicherelemente verwendet. Im Zeitdiagramm nach Fig. 5 ist ein möglicher Signalverlauf für die Übertragung des Datensignals DS1 dargestellt. Dieser Signalverlauf wird erreicht, indem an die Ausgänge der Demultiplexer Kippstufen eingeschaltet werden. In Fig. 5 sind die einzelnen Bits des Datensignals mit 1, 2, 3,... bezeichnet. An die Ausgänge DA1, DA2 des ersten Demultiplexers DX1 werden diese Bits abwechselnd mit dem Taktsignal T2 durchgeschaltet. Durch Abtastung der durchgeschalteten Bits entstehen die Datensignale auf den Datenwegen DWO1 und DWO2. Die Datenwege sind in Fig. 2 eingezeichnet. In den Demultiplexern DX2 und DX3 werden die Eingangssignale mit einem Taktsignal T4 der halben Frequenz von T2 weiter parallelisiert. Durch erneutes Abtasten der Ausgangssignale der Demultiplexer DX2 und DX3 ergeben sich die dargestellen Datensignale auf den Datenwegen DW1 bis DW3. Das Signal auf dem Datenweg DW4 kann dagegen direkt an den Scrambler bzw. den Coder geführt werden. Der Übernahmetakt ist mit TU bezeichnet. Werden Datensignale mit niedrigerer Datenrate übertragen, kann ein Teil der Kippstufen und gegegebenenfalls alle Kippstufen überbrückt werden.

Der Empfangsteil der Verbindungseinrichtung ist dem Sendeteil entsprechend invers aufgebaut. Am Dateneingang DIM wird das Multiplexsignal RXD empfangen und einem optoelektrischen Wandler OE zugeführt. Dieser ist mit einem Seriell-Parallel-Umsetzer verbunden, dessen Parallelausgänge an einen Decoder DCO angeschaltet sind. An dessen fünf Ausgänge sind die Descrambler DCR1 bis DCR5 angeschlossen. Am fünften Ausgang wird das die Zusatzinformation beinhaltende Datensignal über den Descrambler DCR5 direkt ausgegeben.
Der erste Descrambler DCR1 ist auf einen vierten Demultiplexer DX4 geführt, dessen erster Ausgang den Datenausgang DO3 bildet und dessen zweiter Ausgang durch einen vierten Multiplexer MX4 mit dem zweiten Decoderausgang bzw. dem Ausgang des zweiten Descramblers DCR2 zusammengefaßt werden kann. In derselben Weise ist der vierte Ausgang über einen fünften Demultiplexer DX5 auf Datenausgang DO4 bzw. einen Eingang eines fünften Multiplexers MX5 geführt, dessen zweiter Eingang mit dem dritten Ausgang des Decoders DCO verbunden ist. Der Ausgang des vierten Multiplexers MX4 ist über einen sechsten Multiplexer MX6 auf dem Datenausgang DO1 geführt. Der Ausgang des fünften Multiplexers MX5 ist über einen sechsten Demultiplexer DX6 direkt auf den zweiten Datenausgang DO2 durchschaltbar oder auf einen zweiten Dateneingang des sechsten Multiplexers MX6 durchschaltbar.

Der Empfangsteil weist eine dem Sendeteil entsprechende Funktion auf. Bei der Übertragung von vier bzw. mit Zusatzkanal ZK fünf unterschiedliche Datensignalen werden diese an den Datenausgängen DO1 bis DO4 bzw. DO5 abgegeben. Ebenso können wieder Datensignale doppelter Geschwindigkeit DS21, DS22 durch Kombination der Ausgangssignale von jeweils zwei Ausgängen des Decoders gebildet werden oder die Ausgangssignale der vier ersten Ausgänge zu einem einzigen Datenkanal DS1 kombiniert werden, das dann am Datenausgang DO1 abgegeben wird. Die Steuerung der Betriebsart erfolgt entsprechend der Steuerung des Sendeteils über dieselben Steuereingänge EN0 und EN1, jedoch treten anstelle von Multiplexern Demultiplexer und anstelle von Demultiplexer Multiplexer, da hier die Ausgangssignale des Decoders zu den ursprünglichen Datensignalen DS1 oder DS21 und DS22 zusammengefaßt werden. Laufzeitglieder sind im allgemeinen nicht erforderlich. Die empfangsseitigen Taktsignale T2E und T4E zur Steuerung der Multiplexer, um eine Umsetzung in ein serielles Signals DS1, DS21 oder DS22 zu realisieren, und für den Decoder werden von einer Taktgewinnung TG und einer Synchronisation- und Fehlerüberwachungseinrichtung SYFE geliefert.

## Patentansprüche

1. Verbindungseinrichtung zur Datenübertragung für eine unterschiedliche Anzahl von Datensignalen (DS1; DS21, DS22; DS41 bis DS44), die in einer Verteilereinrichtung (DX1 bis DX3, MX1 bis MX3) in parallele Datenwege aufgeteilt werden und einem Coder (CO) zugeführt werden, dessen Ausgänge an einen Parallel-Seriell-Umsetzer (PSU) angeschaltet sind und empfangsseitig Ober einen Seriell-Parallel-Umsetzer (SPU) einem Decoder (DCO) zugeführt werden und über eine inverse Einrichtung in die ursprünglichen Datensignale (DS1, DS21, D22, DS41 bis DS44) rückumgesetzt werden,
**dadurch gekennzeichnet**,
daß dem Parallel-Seriell-Umsetzer (PSU) ein elektrooptischer Wandler (E0) nachgeschaltet ist;
daß dem Seriell-Parallel-Umsetzer (SPU) ein optoelektrischer Wandler (OE) vorgeschaltet ist;
daß die Datenübertragung über einen Lichtwellenleiter erfolgt;
daß sendeseitig eine Verteilereinrichtung (DX1 bis DX3, MX1 bis MX3) zur Aufteilung eines Datensignals (DS1) mit hoher Datenrate oder zur Aufteilung von bis zu n=4 Datensignalen (DS21, DS22; DS41 bis DS44) mit niedrigeren Datenraten auf n=4 parallele Datenwege (DW1 bis DW4) vorgesehen ist, die einen ersten, zweiten und dritten Demultiplexer (DX1 bis DX3) mit jeweils zwei Ausgängen und einen ersten bis dritten Multiplexer (MX1 bis MX3) mit jeweils zwei Eingängen aufweist;
daß jeweils ein erster Eingang des ersten Demultiplexers (DX1) sowie der Multiplexer (MX1 bis MX3) als Dateneingang (DI1 bis DI4) vorgesehen ist;
daß ein erster Ausgang des ersten Demultiplexers (DX1) mit einem zweiten Eingang des ersten Multiplexers (MX1) verbunden ist und ein zweiter Ausgang mit dem Eingang des zweiten Demultiplexers (DX2) verbunden ist;
daß der Ausgang des ersten Multiplexers (MX1) mit dem Eingang des dritten Demultiplexers (DX3) verbunden ist;
daß jeweils ein erster Ausgang des zweiten und des dritten Demultiplexers (DX2, DX3) mit Eingängen des Coders (CO) verbunden ist, daß jeweils ein zweiter Ausgang des zweiten und des dritten Multiplexers (DX2, DX3) über den zweiten (MX2) beziehungsweise den dritten Multiplexer (MX3) mit weiteren Eingängen des Coders (CO) verbunden ist;
daß dem ersten Demultiplexer (DX) ein Taktsignal (T2) zugeführt wird und dem zweiten und dritten Multiplexer (MX2, MX3) ein weiteres Taktsignal (T4) zugeführt wird;
daß empfangsseitig ein Decoder (DCO) vorgesehen ist und daß eine zur Verteileinrichtung inverse Einrichtung (DX4 bis DX6, MX4 bis MX6) mit drei Demultiplexern (DX4 bis DX6) mit jeweils zwei Ausgängen und drei Multiplexern (MX4 bis MX6) mit jeweils zwei Eingängen zur Rückgewinnung des einen Datensignals (DS1) mit hoher Taktrate oder der bis zu n=4 Datensignale (DS21, DS22; DS41 bis DS44) mit niedrigeren Datenraten vorgesehen ist.

2. Verbindungseinrichtung nach Anspruch 1,
**dadurch gekennzeichnet**,
daß ein Zusatzkanal (ZK) mit der Datenrate eines Datenweges (DW1,...) vorgesehen ist, dessen Datensignal (DE5) mit den Signalen der übrigen Datenwege (DW1 bis DW4) dem Coder (CO) zugeführt wird.

3. Verbindunseinrichtung nach Anspruch 1 oder 2,
**dadurch gekennzeichnet,**
daß der Coder (CO) für eine 5bit/6bit-Codeumsetzung vorgesehen ist und daß ein entsprechender Decoder (DCO) vorgesehen ist.

4. Verbindungseinrichtung nach einem der vorhergehenden Ansprüche,
**dadurch gekennzeichnet,**
daß verschiedene Übertragungsraten und die zugehörigen Datenraten der Datensignale (DS1; DS21, DS22; DS41 bis DS44) durch Verwendung von Steuertakten (T2, T4) mit entsprechenden Frequenzen realisiert werden.

5. Verbindungseinrichtung nach einem der vorhergehenden Ansprüche,
**dadurch gekennzeichnet,**
daß in den Datenwegen (DW1 bis DW3) Laufzeitglieder eingeschaltet sind.

6. Verbindungseinrichtung nach einem der vorhergehenden Ansprüche,
**dadurch gekennzeichnet,**
daß sendeseitig eine Scramblereinrichtung (SCR1,...) vorgesehen ist und daß empfangsseitig eine Descramblereinrichtung (DCR1,...) vorgesehen ist.

7. Verbindungseinrichtung nach einem der vorhergehenden Ansprüche,
**dadurch gekennzeichnet,**
daß sie in Steckeinrichtungen des Lichtwellenleiters eingebaut ist.

8. Verbindungseinrichtung nach Anspruch 3,
**dadurch gekennzeichnet**,
daß die Übertragungsrate 12 Mbit/s beträgt.

## Claims

1. Connection device for data transmission for a different number of data signals (DS1; DS21, DS22; DS41 to DS44) which are split into parallel data paths in a distributor means (DX1 to DX3, MX1 to MX3) and are supplied to a coder (CO), the outputs of which are connected to a parallel-serial converter (PSU) and are supplied on the receiving side to a decoder (DCO) via a serial-parallel converter (SPU) and are converted back into the original data signals (DS1, DS21, DS22, DS41 to DS44) via an inverse means, characterized
in that an electro-optical transducer (EO) is connected downstream of the parallel-serial converter (PSU);
in that an opto-electrical transducer (OE) is connected upstream of the serial-parallel converter (SPU);
in that the data transmission takes place via a light waveguide;
in that provided on the transmitting side is a distributor means (DX1 to DX3, MX1 to MX3) for dividing a data signal (DS1) having a high data rate or for dividing up to n=4 data signals (DS21, DS22; DS41 to DS44) having lower data rates onto n=4 parallel data paths (DW1 to DW4), which distributor means has a first, second and third demultiplexer (DX1 to DX3) having two outputs in each case and a first to third multiplexer (MX1 to MX3) having two inputs in each case;
in that in each case a first input of the first demultiplexer (DX1) and of the multiplexers (MX1 to MX3) is provided as data input (DI1 to DI4);
in that a first output of the first demultiplexer (DX1) is connected to a second input of the first multiplexer (MX1) and a second output is connected to the input of the second demultiplexer (DX2);
in that the output of the first multiplexer (MX1) is connected to the input of the third demultiplexer (DX3);
in that in each case a first output of the second and of the third demultiplexer (DX2, DX3) is connected to inputs of the coder (CO),
in that in each case a second output of the second and of the third multiplexer (DX2, DX3) is connected to further inputs of the coder (CO) via the second (MX2) or third (MX3) multiplexer respectively;
in that a clock signal (T2) is supplied to the first demultiplexer (DX) and a further clock signal (T4) is supplied to the second and third multiplexer (MX2, MX3);
in that provided on the receiving side is a decoder (DCO); and
in that a means (DX4 to DX6, MX4 to MX6) that is inverse to the distributor means is provided, said means having three demultiplexers (DX4 to DX6) with in each case two outputs and three multiplexers (MX4 to MX6) with in each case two inputs for recovering the one data signal (DS1) having a high clock rate or the up to n=4 data signals (DS21, DS22; DS41 to DS44) having lower data rates.

2. Connection device according to Claim 1, characterized in that an auxiliary channel (ZK) having the data rate of one data path (DW1,...) is provided, the data signal (DE5) of which is supplied to the coder (CO) with the signals of the other data paths (DW1 to DW4).

3. Connection device according to Claim 1 or 2, characterized in that the coder (CO) is provided for a 5-bit/6-bit code conversion and in that a corresponding decoder (DCO) is provided.

4. Connection device according to one of the preceding claims, characterized in that different transmission rates and the associated data rates of the data signals (DS1; DS21, DS22; DS41 to DS44) are realized by using control clocks (T2, T4) with corresponding frequencies.

5. Connection device according to one of the preceding claims, characterized in that delay elements are inserted into the data paths (DW1 to DW3).

6. Connection device according to one of the preceding claims, characterized in that a scrambler means (SCR1,...) is provided on the transmitting side and in that a descrambler means (DCR1,...) is provided on the receiving side.

7. Connection device according to one of the preceding claims, characterized in that it is integrated in plug devices of the light waveguide.

8. Connection device according to Claim 3, characterized in that the transmission rate is 12 Mbit/s.

## Revendications

1. Dispositif de communication pour la transmission de n'importe quel nombre de signaux de données (DS21; DS22; DS41 à DS44), qui sont répartis, dans un dispositif répartiteur (DX1 à DX3, MX1 à MX3), dans des voies parallèles de transmission de données, qui sont envoyés à un codeur (CO), dont les sorties sont reliées à un convertisseur parallèle-série (PSU), qui sont envoyés, côté réception, par l'intermédiaire d'un convertisseur série-parallèle (SPU), à un décodeur (DCO) et qui sont convertis en retour, par l'intermédiaire d'un dispositif à action inverse, en les signaux de données (DS1,DS21,DS22,DS41 à DS44) d'origine,
caractérisé par le fait
qu'un transducteur électro-optique (EO) est branché en aval du convertisseur parallèle-série (PSU);
qu'un transducteur opto-électrique (OE) est branché en amont du convertisseur série-parallèle (SPU);
que la transmission de données est effectuée par l'intermédiaire d'un guide d'ondes lumineuses;
qu'il est prévu, côté émission, un dispositif répartiteur (DX1 à DX3, MX1 à MX3) destiné à répartir un signal de données (DS1) à un grand débit de données ou à répartir un nombre de signaux allant jusqu'à n=4 signaux de données (DS21, DS22; DS41 à DS44) à de petits débits de données, dans n=4 voies parallèles de transmission de données (DW1 à DW4), ce dispositif répartiteur comportant des premier, deuxième et troisième démultiplexeurs (DX1 à DX3) ayant chacun deux sorties et d'un premier à un troisième multiplexeur (MX1 à MX3) ayant chacun deux entrées;
qu'une première entrée du premier démultiplexeur (DX1) ainsi que des multiplexeurs (MX1 à MX3) est prévue en tant qu'entrée de données (DI1 à DI4);
qu'une première sortie du premier démultiplexeur (DX1) est reliée à une seconde entrée du premier multiplexeur (MX1) et qu'une seconde sortie est reliée à l'entrée du deuxième démultiplexeur (DX2);
que la sortie du premier multiplexeur (MX1) est reliée à l'entrée du troisième démultiplexeur (DX3);
que les premières sorties des deuxième et troisième démultiplexeurs (DX2,DX3) sont reliées à des entrées du codeur (CO), que les secondes sorties des deuxième et troisième démultiplexeurs (DX2,DX3) sont reliées, par l'intermédiaire du deuxième multiplexeur (MX2) et du troisième multiplexeur (MX3), à d'autres entrées du codeur (CO);
qu'un signal de cadence (T2) est envoyé au premier démultiplexeur (DX) et qu'un autre signal de cadence (T4) est envoyé aux deuxième et troisième multiplexeurs (MX2,MX3);
qu'il est prévu, côté réception, un décodeur (DCO), et qu'il est prévu un dispositif (DX4 à DX6, MX4 à MX6), qui a une action inverse de celle du dispositif répartiteur et qui comporte trois démultiplexeurs (DX4 à DX6) ayant chacun deux sorties et trois multiplexeurs (MX4 à MX6) ayant chacun deux entrées pour récupérer le signal de données (DS1) ayant un grand débit ou les signaux de données (DS21; DS22; DS41 à DS44), allant jusqu'à n=4, ayant de petits débits de données.

2. Dispositif de communication suivant la revendication 1, caractérisé par le fait qu'il est prévu un canal supplémentaire (ZK) ayant le débit de données d'une voie de transmission de données (DW1,...), dont le signal de données (DE5) est envoyé, avec les signaux des autres voies de transmission de données (DW1 à DW4), au codeur (CO).

3. Dispositif de communication suivant la revendication 1 ou 2, caractérisé par le fait que le codeur (CO) est prévu pour une conversion de code 5 bits/6 bits et qu'il est prévu un décodeur correspondant (DCO).

4. Dispositif de communication suivant l'une des revendications précédentes, caractérisé par le fait que des débits de transmission différents et les débits associés de données des signaux de données (DS1; DS21; DS22; DS41 à DS44) sont obtenus en utilisant des cadences de commande (T2,T4) ayant des fréquences adéquates.

5. Dispositif de communication suivant l'une des revendications précédentes, caractérisé par le fait que des circuits à retard sont branchés dans les voies de transmission de données (DW1 à DW3).

6. Dispositif de communication suivant l'une des revendications précédentes, caractérisé par le fait qu'il est prévu, côté émission, un dispositif de brouillage (SCR1,...) et qu'il est prévu, côté réception, un dispositif de débrouillage (DCR1,...).

7. Dispositif de communication suivant l'une des revendications précédentes, caractérisé par le fait qu'il est monté dans des dispositifs de raccordement à enfichage du guide d'ondes lumineuses.

8. Dispositif de communication suivant la revendication 3, caractérisé par le fait que le débit de transmission est égale à 12 Mbits/s.
